# EUROPÄISCHE PATENTANMELDUNG

(11) **EP 1 983 151 A2**
(43) Veröffentlichungstag der Anmeldung: **22.10.2008**
(21) Anmeldenummer: 08003070.3
(22) Anmeldetag: 20.02.2008
(51) Int. Cl.: E21B 17/10, F16L 7/00, F24J 3/08

(54) **Abstandhalter zur achsparallelen Fixierung mehrerer Rohrstränge**

(30) Priorität: 21.04.2007 DE 102007018979
(71) Anmelder: Müller, Hans-Werner, 56729 Kirchwald (DE)
(72) Erfinder: Müller, Hans-Werner, 56729 Kirchwald (DE)
(74) Vertreter: Grommes, Karl F.

(57) **Zusammenfassung**

Die Erfindung betrifft einen Abstandhalter (1) zur achsparallelen Fixierung mehrerer, ein Rohrbündel (2) bildender Rohrstränge (3), insbesondere Erdwärmesonden, die in einer Erdbohrung (5) anordbar sind.

Um einen einfach aufgebauten Abstandhalter (1) zu erhalten, welcher sowohl eine sichere Beabstandung der Rohrstränge (3) voneinander als auch des Rohrbündels (2) von der Bohrlochwandung (7) gewährleistet, schlägt die Erfindung vor, durch stegförmige Verbindungsteile (9, 9', 10) beabstandete kreisringförmige Abschnitte (8) zu verwenden, welche die Rohrstränge (3) außenseitig mindestens teilweise formschlüssig umgreifen. Dabei weist jeder kreisringförmige Abschnitt (8) mindestens ein sich radial nach außen erstreckendes rippenförmiges Abstandsteil (11) auf, über welches das Rohrbündel (2) zentrisch innerhalb der Erdbohrung (5) abstützbar ist, so dass ein genau definierter Ringspalt zwischen dem Rohrbündel (2) und der Bohrlochwandung (7) herstellbar ist.

## Beschreibung

### Technisches Gebiet

Die Erfindung betrifft einen Abstandhalter zur achsparallelen Fixierung mehrerer, ein Rohrbündel bildender Rohrstränge, insbesondere Erdwärmesonden, die in einer Erdbohrung anordbar sind.

Zur Nutzung der Erdwärme für Heizzwecke sind beispielsweise aus der EP 0 833 115 A1 Erdwärmesonden bekannt, die aus vier parallel zueinander angeordneten Rohrsträngen bestehen, welche senkrecht in den Erdboden eingebracht sind. Dabei sind jeweils zwei Rohrstränge am Fuß durch Umlenkstücke oder einen entsprechenden Sondenfuß miteinander verbunden. Zur Verbesserung des Wärmeüberganges zwischen Erdreich und dem innerhalb der Rohrstränge zirkulierenden Wärmeträgerfluid werden Abstandhalter sowie Verfüllmaterial mit erhöhter Wärmeleitfähigkeit eingesetzt. Dabei wird zwischen den Rohrsträngen der Erdwärmesonden eine weitere Leitung mitgeführt, welche zum Einbringen des Verfüllmaterials in die Erdbohrung dient.

In der Praxis hat es sich als vorteilhaft erwiesen, dass das Rohrbündel koaxial zur Erdbohrung ausgerichtet ist, damit um dieses ein möglichst gleichmäßiger Ringspalt freibleibt, welcher es erlaubt, das Rohrbündel in möglichst gleicher Stärke mit dem Verfüllmaterial zu ummanteln. Durch diese Maßnahme soll zum einen eine dauerhafte Fixierung des Rohrbündels innerhalb der Erdbohrung sowie eine gute Wärmeleitung der Rohrstränge zum umgebenden Erdreich sichergestellt werden und zum anderen ein Schutzmantel geschaffen werden, der den Übertritt des Wärmeträgerfluids in das umgebende Erdreich im Falle von Leckagen verhindert.

Die aus der EP 0 833 115 A1 bekannten Abstandhalter sollen vor allem eine definierte Beabstandung der einzelnen Rohrstränge voneinander bewirken und weisen hierzu eine kreisförmige Grundform auf, wobei verteilt angeordnete Abschnitte vorgesehen sind, die jeweils eine einseitig in axialer Richtung und dem Mittelpunkt des Abstandhalters gegenüberliegend freie Aussparung für die einzelnen Rohrstränge besitzen. Dabei sind die einzelnen kreisringförmigen Abschnitte kraftschlüssig durch Stege miteinander verbunden.

Es sind darüber hinaus auch noch Leitungsanordnungen anderer Art bekannt, bei denen nicht Rohrstränge nebeneinander verlaufen, sondern eine Leitung konzentrisch in einer anderen Leitung von größerem Durchmesser angeordnet ist. Auch dabei kommen Abstandhalter zur Lagesicherung der Leitungen zum Einsatz. Dies trifft z. B. für eine Erdwärmesonde gemäß der DE 20 2004 014 113 U1 zu, bei der ein Innenrohr in einem größeren Hüllrohr geführt ist, wobei zur Aufrechterhaltung eines Ringspalts zwischen Innenrohr und Hüllrohr Abstandhalter im Ringspalt angeordnet sind. Eine vergleichbare Anordnung ist auch durch die DE 199 19 555 C1 bekannt. Danach wird das innere Zuleitungsrohr ebenfalls mit Hilfe von Abstandhaltern konzentrisch im Wärmetauscherrohr einer Vorrichtung für die Nutzung geothermischer Energie gehalten.

Die bekannten Abstandhalter gewährleisten zwar eine Fixierung der Rohrstränge zueinander, verhindern aber nicht, dass die einzelnen Rohrstränge des Rohrbündels sich an die Bohrlochwandung anlegen können, so dass eine vollständige Ummantelung des Rohrbündels mit Verfüllmaterial in der Regel nicht sichergestellt werden und es bei einer Leckage häufig zu einem Eintreten von Wärmeträgerfluid in das Erdreich kommen kann.

### Darstellung der Erfindung

Der Erfindung liegt die Aufgabe zugrunde, einen einfach aufgebauten Abstandhalter anzugeben, welcher sowohl eine sichere Beabstandung der Rohrstränge voneinander als auch des Rohrbündels von der Bohrlochwandung gewährleistet.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, durch stegförmige Verbindungsteile beabstandete kreisringförmige Abschnitte zu verwenden, weiche die Rohrstränge außenseitig teilweise formschlüssig umgreifen. Dabei ist jeder kreisringförmige Abschnitt mindestens mit einem sich radial nach außen erstreckenden rippenförmigen Abstandsteil verbunden, über welches das Rohrbündel zentrisch innerhalb der Erdbohrung abstützbar ist, so dass sich ein genau definierter Ringspalt (beispielsweise zwischen 30 und 70 mm) zwischen dem Rohrbündel und der Bohrlochwandung ergibt.

Um den Abstandhalter auf einfache Weise nachträglich um das jeweilige Rohrbündel herumlegen zu können, ist vorgesehen, dass mindestens eines der Verbindungsteile aus zwei sich aneinander anschließenden Teilstücken besteht, die mittels eines Verschlusses lösbar miteinander verbindbar sind, so dass der Abstandhalter bei geöffnetem Verschluss manschettenartig um das Rohrbündel gelegt und der Verschluss dann verschlossen wird.

Um ein schnelles und einfaches Herumlegen des Abstandhalters um das Rohrbündel zu gewährleisten, sind die Verbindungsteile aus einem verformbaren Material oder wirken scharnierartig mit den kreisringförmigen Abschnitten zusammen. Dabei können die kreisringförmigen Abschnitte des Abstandhalters bei geöffnetem Verschluss beispielsweise zur platzsparenden Bevorratung des Abstandhalters entlang einer Geraden angeordnet werden.

Die kreisringförmigen Abschnitte des Abstandhalters sind vorzugsweise elastisch ausgebildet, so dass der jeweilige Rohrstrang durch Klemmung kraftschlüssig mit dem Abstandhalter verbindbar ist.

Bei einer ersten Ausführungsform der Erfindung weist das erste Teilstück des den Verschluss aufweisenden Verbindungsteiles eine sägezahnförmige Kontur und das zweite Teilstück eine schmale Ausnehmung auf, durch welche das erste Teilstück hindurchschiebbar ist und eine entsprechend ausgebildete Sperrlasche des zweiten Teilstückes hintergreift, derart, dass das erste Teilstück nicht von alleine wieder durch die Ausnehmung des zweiten Teilstückes zurückgleiten kann.

Bei einer zweiten Ausführungsform der Erfindung handelt es sich bei dem Verschluss um einen Klettverschluss.

Der Abstandhalter kann vorzugsweise einstückig ausgebildet sein und aus Kunststoff bestehen, so dass er auf einfache Weise durch Spritzgießen hergestellt werden kann.

Um ein schnelles Herablassen des Rohrbündels in die Erdbohrung zu erreichen, ohne dabei eine Behinderung durch die rippenförmigen Abstandsteile der Abstandhalter befürchten zu müssen, hat es sich als vorteilhaft erwiesen, wenn die rippenförmigen Abstandsteile, in axialer Richtung des Rohrbündels gesehen, jeweils eine nach außen gewölbte äußere Kontur aufweisen. Dabei kann die äußere Kontur der rippenförmigen Abstandsteile beispielsweise kreisabschnittförmig ausgebildet sein.

### Kurze Beschreibung der Zeichnung

Weitere Einzelheiten und Vorteile der Erfindung ergeben sich aus den folgenden, anhand von Figuren erläuterten Ausführungsbeispielen. Es zeigen:
- Fig.1: eine perspektivische Ansicht eines um ein Rohrbündel gelegten erfindungsgemäßen Abstandhalters;
- Fig.2: eine Draufsicht auf das in Fig.1 dargestellte Rohrbündel mit dem erfindungsgemäßen Abstandhalter und einem gestrichelt angedeuteten Querschnitt einer Erdbohrung;
- Fig.3: den in den Fig.1 und 2 dargestellten Abstandhalter im aufgeklappten Zustand,
- Fig.4: ein anderes Ausführungsbeispiel für einen Abstandhalter in einer Darstellung entsprechend Fig.3 und
- Fig.5: den Gegenstand von Fig,4 in einer Darstellung entsprechend Fig.2.

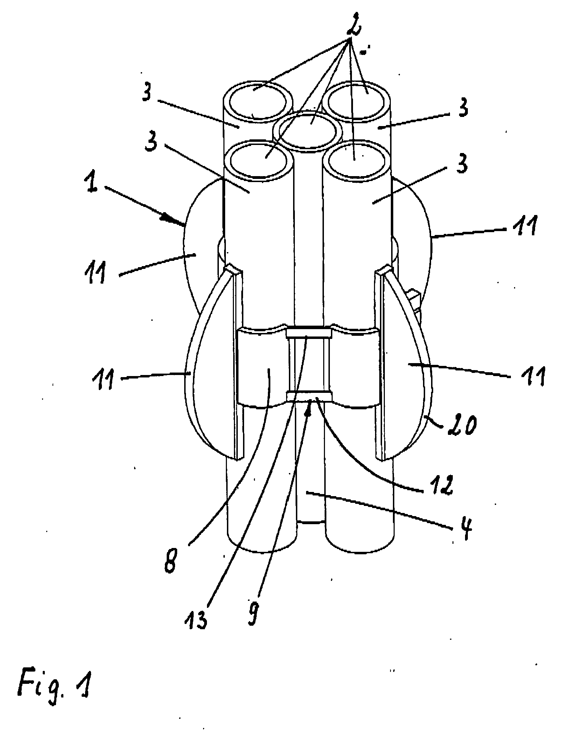

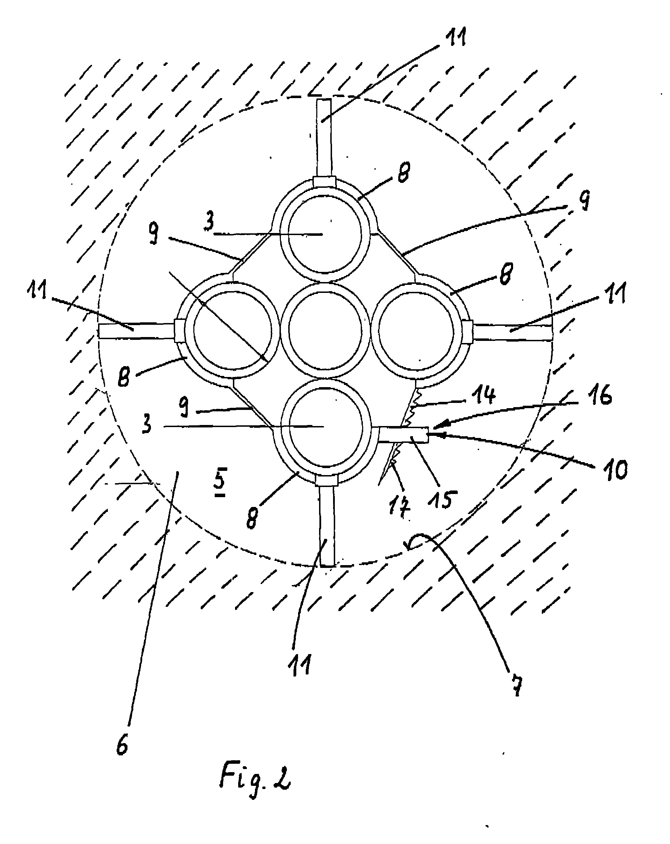

In Fig.1 ist mit 1 ein erfindungsgemäßer Abstandhalter bezeichnet, der eine achsparallele Fixierung eines Rohrbündels 2 bewirkt, welches aus vier Rohrsträngen 3 zum Transport einer Wärmeträgerflüssigkeit und einer Leitung 4 zur Einbringung eines Füllstoffes in eine Erdbohrung 5 (Fig.2) besteht. Das Rohrbündel 2 ist koaxial innerhalb der Erdbohrung 5 angeordnet, so dass ein ringförmiger Raum 6 zwischen dem Rohrbündel 2 und der Bohrlochwandung 7 besteht.

Der Abstandhalter 1 ist einstückig ausgebildet und besteht aus Kunststoff. Er weist vier kreisringförmige Abschnitte 8 auf, die über Verbindungsteile 9, 10 miteinander verbunden sind, und welche die ihnen zugeordneten Rohrstränge 3 außenseitig formschlüssig und kraftschlüssig (elastisch) umgreifen. Dabei weist jeder kreisringförmige Abschnitt 8 des Abstandhalters 1 ein sich radial nach außen erstreckendes rippenförmiges Abstandsteil 11 auf, über welches das Rohrbündel 2 zentrisch innerhalb der Erdbohrung 5 abgestützt wird.

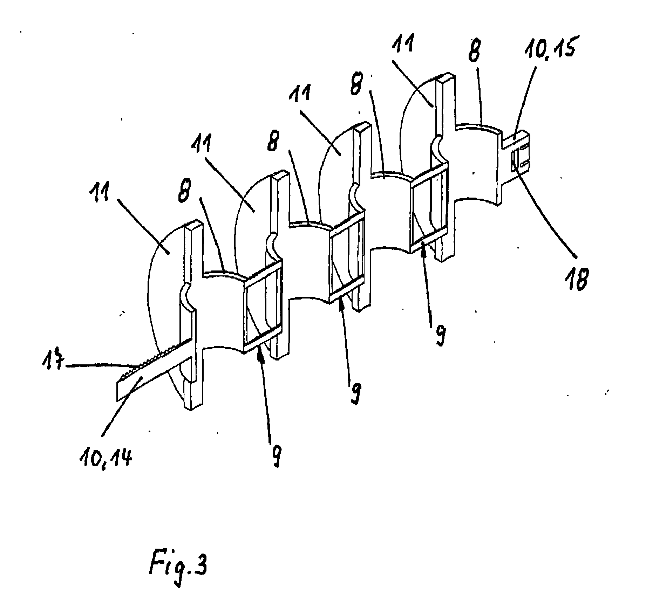

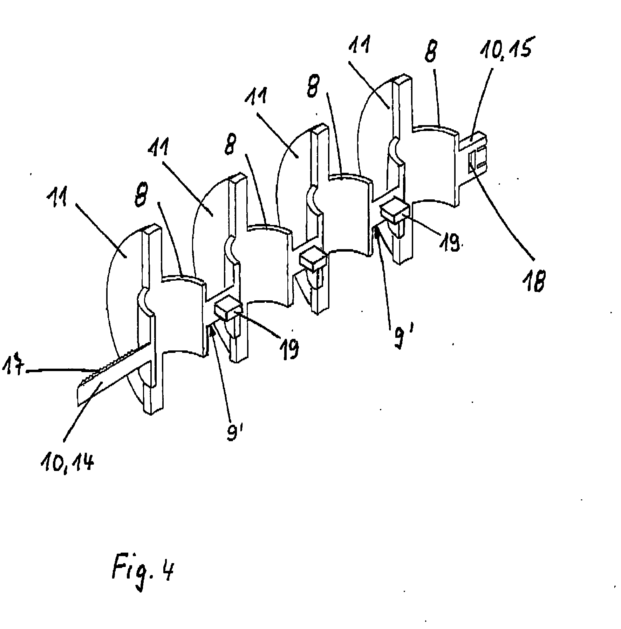

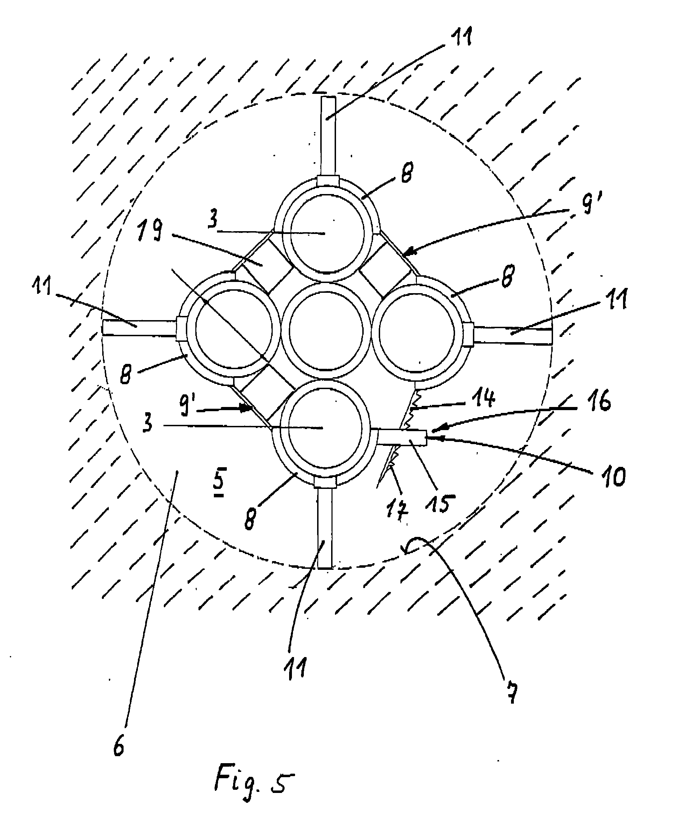

Die Verbindungsteile 9, 9' bestehen im Wesentlichen aus zwei parallel zueinander angeordneten, sich in axialer Richtung des Abstandhalters 1 erstreckenden stegförmigen Teilen 12, 13 (Fig.1 und 3) oder einem breiteren Mittelsteg (Fig.4 und 5).

Das mit dem Bezugszeichen 10 bezeichnete Verbindungsteil besteht aus zwei sich aneinander anschließenden Teilstücken 14, 15, die mittels eines Verschlusses 16 lösbar miteinander verbunden sind. Dabei besitzt das erste Teilstück 14 eine sägezahnförmige Kontur 17, während das zweite Teilstück 15 eine schmale Ausnehmung 18 (Fig.3) aufweist, durch welche das erste Teilstück 14 hindurchschiebbar ist und eine entsprechend ausgebildete Sperrlasche (nicht dargestellt) des zweiten Teilstückes 15 hintergreift.

Die rippenförmigen Abstandsteile 11 des Abstandhalters 1 weisen jeweils eine nach außen gewölbte äußere Kontur 20 auf, die bei den dargestellten Ausführungsbeispielen etwa halbkreisförmig ausgebildet ist.

Wie aus Fig.3 ersichtlich, lässt sich der erfindungsgemäße Abstandhalter 1 bei geöffnetem Verschluss 16 aufklappen, so dass die kreisringförmigen Abschnitte 8 entlang einer Geraden anordbar und der Abstandhalter 1 platzsparend lagerbar sind.

Zur Montage des Abstandhalters 1 wird die gesamte in Fig.3 dargestellte Anordnung derart um das Rohrbündel 2 gelegt, dass die vier Rohrstränge 3 von den kreisringförmigen Abschnitten 8 form- und kraftschlüssig umgriffen werden. Anschließend wird dann das erste Teilstück 14 des Verbindungsteiles 10 durch die Ausnehmung 18 des zweiten Teilstückes 15 hindurchgeschoben und der Abstandhalter 1 straff um das Rohrbündel 2 angezogen, wobei ein Zurückgleiten des ersten Teilstückes 14 durch die sägezahnförmige Kontur 17 und die Sperrlasche des zweiten Teilstückes 15 verhindert wird.

Wie aus den Fig.4 und 5 hervorgeht, können an den Verbindungsteilen 9', insbesondere wenn sie aus einem etwas breiteren Mittelsteg bestehen, Vorsprünge 19 angeordnet sein, welche bei angelegtem und geschlossenem Abstandhalter 1 in den freien Zwischenraum benachbarter Rohrstränge 3 eintreten und dort als Widerlager wirken. Sie tragen damit zur Fixierung der Rohrstränge 3 bei und stabilisieren im Ergebnis das Rohrbündel 2. Die Vorsprünge 19 weisen im vorliegenden Ausführungsbeispiel eine einfache Rechteckform auf, können aber beispielsweise auch keil- oder zungenförmig ausgebildet sein.

Die Erfindung ist selbstverständlich nicht auf die vorstehend beschriebenen Ausführungsbeispiele beschränkt. So kann es sich bei dem Verschluss beispielsweise auch um einen Klettverschluss handeln.

Ferner muss es sich bei dem Abstandhalter nicht zwingend um einen solchen zur Fixierung von Erdwärmesonden handeln, sondern der erfindungsgemäße Abstandhalter kann auch in Verbindung mit Ankern verwendet werden, welche in Ankerbohrungen sicher fixiert werden sollen.

### Bezugszeichenliste

- 1: Abstandhalter
- 2: Rohrbündel
- 3: Rohrstrang
- 4: Leitung
- 5: Erdbohrung
- 6: ringförmiger Raum
- 7: Bohrlochwandung
- 8: kreisringförmiger Abschnitt
- 9: Verbindungsteil
- 9': Verbindungsteil
- 10: Verbindungsteil
- 11: rippenförmiges Abstandsteil
- 12, 13: stegförmige Teile
- 14: (erstes) Teilstück
- 15: (zweites) Teilstück
- 16: Verschluss
- 17: sägezahnförmige Kontur
- 18: Ausnehmung
- 19: Vorsprung
- 20: Kontur

## Patentansprüche

1. Abstandhalter zur achsparallelen Fixierung mehrerer, ein Rohrbündel (2) bildender Rohrstränge (3), insbesondere Erdwärmesonden, die in einer Erdbohrung (5) anordbar sind, mit den Merkmalen:
a) der Abstandhalter (1) weist eine der Anzahl der außenliegenden Rohrstränge (3) des Rohrbündels (2) entsprechende Anzahl von kreisringförmigen Abschnitten (8) auf, die über Verbindungsteile (9, 9', 10) miteinander verbunden sind, und die, bei der bestimmungsgemäßen Verwendung des Abstandhalters (1), die ihnen zugeordneten Rohrstränge (3) außenseitig mindestens teilweise formschlüssig umgreifen, und
b) jeder kreisringförmige Abschnitt (8) des Abstandhalters (1) weist mindestens ein sich radial nach außen erstreckendes rippenförmiges Abstandsteil (11) auf, über welches das Rohrbündel (2) zentrisch innerhalb der Erdbohrung (5) abstützbar ist.

2. Abstandhalter nach Anspruch 1, **dadurch gekennzeichnet, dass** mindestens eines der Verbindungsteile (10) aus zwei sich aneinander anschließenden Teilstücken (14, 15) besteht, die mittels eines Verschlusses (16) lösbar miteinander verbindbar sind,

3. Abstandhalter nach Anspruch 1 oder 2, **dadurch gekennzeichnet, dass** die Verbindungsteile (9, 9') stegförmig ausgebildet sind.

4. Abstandhalter nach einem der Ansprüche 1 bis 3, **dadurch gekennzeichnet, dass** mindestens ein Teil der Verbindungsteile (9) aus zwei voneinander beabstandeten und parallel zueinander angeordneten, sich in axialer Richtung des Abstandhalters (1) erstreckenden stegförmigen Teilen (12, 13) besteht.

5. Abstandhalter nach einem der Ansprüche 1 bis 4, **dadurch gekennzeichnet, dass** die Verbindungsteile (9, 9', 10) aus einem verformbaren Material bestehen oder scharnierartig mit den kreisringförmigen Abschnitten (8) zusammenwirken.

6. Abstandhalter nach einem der Ansprüche 1 bis 5, **dadurch gekennzeichnet, dass** die kreisringförmigen Abschnitte (8) des Abstandhalters (1) elastisch ausgebildet sind.

7. Abstandhalter nach einem der Ansprüche 1 bis 6, **dadurch gekennzeichnet, dass** das erste Teilstück (14) des den Verschluss (16) aufweisenden Verbindungsteiles (10) eine sägezahnförmige Kontur (17) und das zweite Teilstück (15) eine schmale Ausnehmung (18) aufweist, durch welche das erste Teilstück (14) mindestens teilweise hindurchschiebbar ist und eine entsprechend ausgebildete Sperrlasche des zweiten Teilstückes (15) hintergreift.

8. Abstandhalter nach einem der Ansprüche 1 bis 6, **dadurch gekennzeichnet, dass** es sich bei dem Verschluss (16) um einen Klettverschluss handelt.

9. Abstandhalter nach einem der Ansprüche 1 bis 8, **dadurch gekennzeichnet, dass** der Abstandhalter (1) einstückig ausgebildet ist und aus Kunststoff besteht.

10. Abstandhalter nach einem der Ansprüche 1 bis 9, **dadurch gekennzeichnet, dass** die rippenförmigen Abstandsteile (11) jeweils eine nach außen gewölbte äußere Kontur (20) aufweisen.

11. Abstandhalter nach Anspruch 10, **dadurch gekennzeichnet, dass** die äußere Kontur (20) der rippenförmigen Abstandsteile (11) kreisabschnittförmig ausgebildet ist

12. Abstandhalter nach einem der Ansprüche 1 bis 11, **dadurch gekennzeichnet, dass** die Verbindungssteile (9, 9', 10) zwischen den kreisringförmigen Abschnitten (8) in das Innere des Rohrbündels (2) gerichtete, als Widerlager für benachbarte Rohrstränge (3) dienende Vorsprünge (19) aufweisen.
